(19) Europäisches Patentamt

European Patent Office

Office européen des brevets

(11) EP 1 244 290 A2

(12) EUROPÄISCHE PATENTANMELDUNG

(43) Veröffentlichungstag:
25.09.2002 Patentblatt 2002/39

(51) Int Cl.⁷: H04N 1/60

(21) Anmeldenummer: 01129904.7

(22) Anmeldetag: 15.12.2001

(84) Benannte Vertragsstaaten:
AT BE CH CY DE DK ES FI FR GB GR IE IT LI LU MC NL PT SE TR
Benannte Erstreckungsstaaten:
AL LT LV MK RO SI

(30) Priorität: 19.03.2001 DE 10113247
08.09.2001 DE 10144199

(71) Anmelder: Heidelberger Druckmaschinen Aktiengesellschaft
69115 Heidelberg (DE)

(72) Erfinder:
• Schlüter, Mathias, Dr.
24116 Kiel (DE)
• Klingspohr, Holger
24105 Kiel (DE)

(54) Verfahren zur Reproduktion einer Originalszene aus einem elektronisch abgetasteten Farbnegativ- bzw. Diapositivfilm

(57) Es wird ein Verfahren zur automatischen Reproduktion der Farben einer Originalszene aus einer als Farbnegativ- oder Diapositivfilm vorliegenden Bildvorlage beschrieben. Die Bildvorlage wird elektronisch abgetastet, und die RGB-Farbwerte der Bildpunkte werden als abgetastete Transmissionen bzw. abgetastete Dichten gespeichert. Im RGB-Farbraum wird eine Graugerade (21) ermittelt, die die durch die abgetasteten Dichten der Bildpunkte gebildete Punktwolke (20) optimal approximiert. Die Transmissionen werden korrigiert, indem von den abgetasteten Transmissionen jeweils minimale Transmissionswerte subtrahiert werden. Dann werden rekonstruierte Filmbelichtungen ermittelt, wobei mittels der Graugeraden (21) Filmbelichtungsgeraden (22) konstruiert werden, die den Zusammenhang zwischen den logarithmierten Filmbelichtungen und den korrigierten Dichten beschreiben. Nach der Normierung der Filmbelichtungen auf einen Standard-Bildumfang werden die Filmbelichtungen in den LAB-Farbraum transformiert.

S1 Abtasten des Films

abgetastete RGB-Transmissionen $\tau^A$ bzw. RGB-Dichten $D^A$

S2 Bestimmung der Graugeraden

S3 Korrektur der abgetasteten Dichten

korrigierte RGB-Transmissionen $\tau^K$ bzw. RGB-Dichten $D^K$

S4 Rekonstruktion der Filmbelichtung

rekonstruierte RGB-Filmbelichtungen $\eta^F$ bzw. $H^F = \log \eta^F$

S5 Normierung des Bildumfangs

normierte RGB-Filmbelichtungen $\eta^N$ bzw. $H^N = \log \eta^N$

S6 Transformation in den LAB-Farbraum

Fig. 6

**Beschreibung**

Die Erfindung bezieht sich auf das Gebiet der elektronischen Reproduktionstechnik und betrifft ein Verfahren zur automatischen Reproduktion der Farben der Originalszene aus einer elektronisch abgetasteten Bildvorlage, die als Farbnegativoder Diapositivfilm vorliegt. Im Fall eines Negativfilms als Bildvorlage schließt das Verfahren die Umwandlung von Farbwerten des Farbnegativs mittels einer automatisch ermittelten Negativ/Positiv-Umkehrfunktion ein. Die automatische Reproduktion der Originalszene ist vor allem bei der Verarbeitung von Farbnegativfilmen sehr wichtig, da diese Materialien nicht für die direkte visuellen Betrachtung gedacht sind.

Die elektronische Bildverarbeitung besteht im wesentlichen aus den Schritten Bildeingabe, Bildbearbeitung und Bildausgabe.

Bei der Bildeingabe z.B. mittels eines Farbbildabtasters (Scanners) werden durch trichromatische sowie bildpunkt- und zeilenweise optoelektronische Abtastung einer zu reproduzierenden Farbvorlage drei analoge Farbwertsignale (R, G, B) gewonnen, wobei jedes Farbwert-Tripel (R, G, B) die Farbanteile "Rot" (R), "Grün (G) und "Blau" (B) eines in der Farbvorlage abgetasteten Bildpunktes repräsentiert. Die analogen Farbwertsignale werden in digitale Farbwerte umgewandelt und für die anschließende Bildbearbeitung gespeichert.

Bei der Bildbearbeitung werden die Farbwerte (R, G, B) meistens zunächst nach den Gesetzmäßigkeiten der subtraktiven Farbmischung in Farbauszugswerte (C, M, Y, K) umgesetzt, welche ein Maß für die Dosierung der im späteren Druckprozeß verwendeten Druckfarben "Cyan" (C), "Magenta" (M), "Gelb" (Y) und "Schwarz" (K) sind. Gleichzeitig werden bei der Bildbearbeitung im allgemeinen noch lokale oder selektive Farbkorrekturen unter Sichtkontrolle auf einem Farbmonitor mit dem Ziel durchgeführt, die Farbbildwiedergabe zu verbessern oder redaktionelle Farbänderungen vorzunehmen. Alternativ können die Farbwerte (R, G, B) auch vor der Bildbearbeitung in geräteunabhängige Farbwerte wie z.B. LAB-Farbwerte umgesetzt werden.

Nach der Bildbearbeitung erfolgt die Bildausgabe mittels eines geeigneten Bildausgabegerätes, z.B. eines Belichters oder Recorders, durch punkt- und zeilenweise Belichtung der bearbeiteten Farbauszugswerte des zu reproduzierenden Farbbildes auf einem Aufzeichnungsmaterial, von denen dann die Druckformen für den Mehrfarbendruck des Farbbildes hergestellt werden.

Die abzutastenden Farbvorlagen sind in der Regel Diapositivfilme (Farbumkehrfilme) oder Farbnegativfilme. Ein Diapositivfilm lässt sich nach der Entwicklung direkt betrachten, da er ein farbrichtiges Bild des Originals liefert. Für die Farbbildbeurteilung eines Diapositivfilmes auf einem Farbmonitor können daher die bei der Abtastung des Diapositivfilmes erzeugten Farbwerte direkt oder nach einer Farbkorrektur zur Ansteuerung des Farbmonitors verwendet werden. Ein Farbnegativfilm liefert dagegen nach der Entwicklung kein farbrichtiges Bild der Originalszene. Erst nach dem Umkopieren des Farbnegativs auf ein spezielles Positivpapier ist eine farbrichtige Betrachtung der fotografierten Originalszene möglich. Für die Farbbildbeurteilung der bei der Abtastung des Farbnegativs gewonnenen Farbwerte auf einem Farbmonitor ist daher zunächst eine Negativ/Positiv-Umkehrfunktion zu ermitteln, mit der die Farbwerte des Negativs in farbrichtige Positivwerte umgesetzt werden.

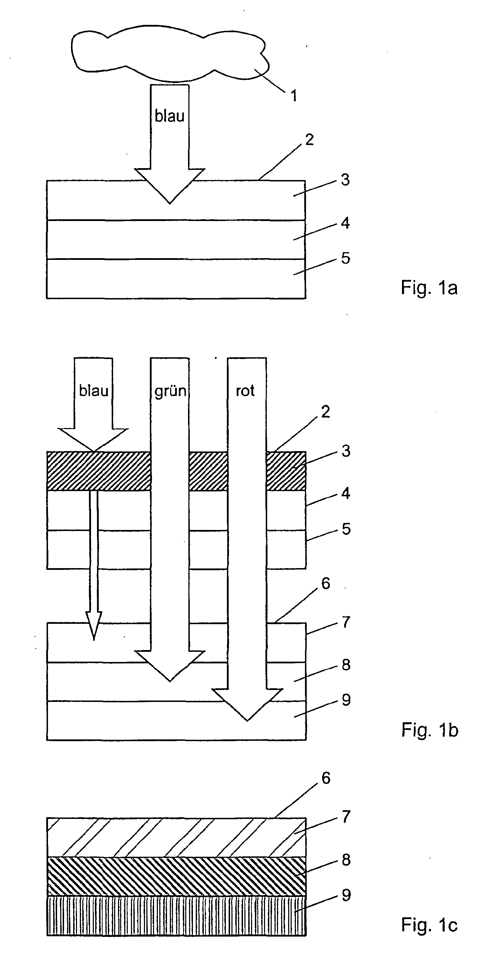

Anhand der Figuren 1a bis 1c sollen der grundsätzliche Aufbau und die Arbeitsweise eines Farbnegativfilmes erläutert werden. Fig. 1a zeigt einen Farbnegativfilm 2, der aus drei einzelnen Filmschichten aufgebaut ist, nämlich einer blauempfindlichen Gelbschicht 3, einer grünempfindlichen Magentaschicht 4 und einer rotempfindlichen Cyanschicht 5. In Fig. 1a ist beispielhaft angenommen, dass der Farbnegativfilm 2 mit einer relativ hohen Lichtmenge blauen Lichts aus der Originalszene 1 belichtet wird. Die blauempfindliche Gelbschicht 3 spricht auf blaues Licht an und lässt grünes und rotes Licht ungehindert durch. Bei Belichtung mit blauem Licht bildet sich bei der chemischen Entwicklung des Negativs 2 in der Gelbschicht 3 umso mehr Gelb-Farbstoff, je stärker die Schicht mit blauem Licht belichtet wurde. Entsprechendes gilt für die anderen beiden Filmschichten, d.h. die grünempfindliche Magentaschicht 4 entwickelt bei der Belichtung mit grünem Licht einen Magenta-Farbstoff und die rotempfindliche Cyanschicht 5 entwickelt bei der Belichtung mit rotem Licht einen Cyan-Farbstoff. Fig. 1b zeigt den Farbnegativfilm 2 nach der Entwicklung. Durch die Belichtung mit der großen Lichtmenge blauen Lichts enthält die Gelbschicht 3 jetzt viel Gelb-Farbstoff, was in der Zeichnung durch die kräftige Schraffur gekennzeichnet ist. Die Magentaschicht 4 und die Cyanschicht 5 enthalten keinen Farbstoff, da sie nicht belichtet wurden. Das entwickelte Negativ 2 wird mit weißem Licht durchleuchtet und auf positives Fotopapier 6 umkopiert. Das Fotopapier 6 ist ebenfalls aus einer blauempfindlichen Gelbschicht 7, einer grünempfindlichen Magentaschicht 8 und einer rotempfindlichen Cyanschicht 9 aufgebaut. Die Gelbschicht 3 des Negativs 2 absorbiert weitgehend den blauen Anteil des weißen Kopierlichts, so dass nur noch wenig blaues Licht auf das Fotopapier 7 fällt und dort die blauempfindliche Gelbschicht 7 nur wenig belichtet. Die grünen und roten Anteile des weißen Kopierlichts können ungehindert durch das Negativ 2 hindurchdringen und die Farbschichten 8 bzw. 9 im Fotopapier 6 entsprechend stark belichten. Fig. 1c zeigt das Ergebnis der Kopierbelichtung nach der Entwicklung des Fotopapiers 6. Die Gelbschicht 7 enthält nur wenig Farbstoff, die Magentaschicht 8 und die Cyanschicht 9 enthalten jedoch viel Farbstoff. Das Zusammenwirken der fast nur vorhandenen Magenta- und Cyanfarbe in dem entwickelten Fotopapier 6 ergibt für das Auge wieder einen blauen Farbeindruck, der dem von der Originalszene 1 kommenden blauen Licht entspricht.

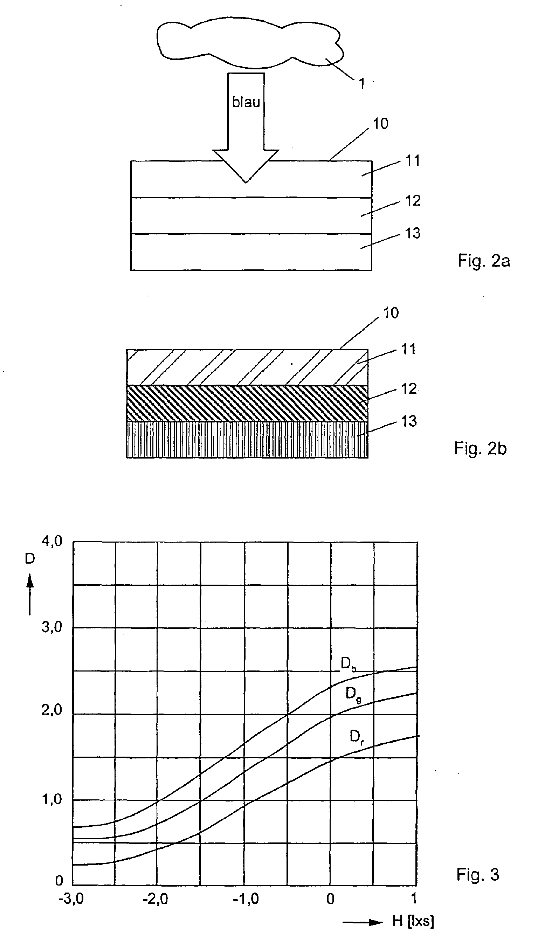

Die Figuren 2a und 2b veranschaulichen den grundsätzlichen Aufbau und die Arbeitsweise eines Diapositivfilmes. Fig. 2a zeigt einen Diapositivfilm 10, der auch wieder aus drei einzelnen Filmschichten aufgebaut ist, nämlich einer blauempfindlichen Gelbschicht 11, einer grünempfindlichen Magentaschicht 12 und einer rotempfindlichen Cyanschicht 13. Als Beispiel wurde wieder angenommen, dass der Diapositivfilm 10 mit blauem Licht hoher Lichtmenge aus der Originalszene 1 belichtet wird. Die blauempfindliche Gelbschicht 10 spricht auf blaues Licht an und lässt grünes und rotes Licht ungehindert durch. In den chemischen Entwicklungsprozess für den Diapositivfilm ist eine Farbumkehrung bereits eingebaut, d.h. in der Gelbschicht 11 bildet sich umso weniger Gelb-Farbstoff, je stärker die Schicht mit blauem Licht belichtet wurde. Entsprechendes gilt für die anderen beiden Filmschichten, d.h. die grünempfindliche Magentaschicht 12 entwickelt bei der Belichtung mit grünem Licht eine Menge an Magenta-Farbstoff, die umgekehrt proportional zur aufgenommenen Lichtmenge ist, und die rotempfindliche Cyanschicht 5 entwickelt bei der Belichtung mit rotem Licht eine umgekehrt proportionale Menge an Cyan-Farbstoff. Wegen dieser Eigenschaft des Entwicklungsprozesses wird der Diapositivfilm auch als Farbumkehrfilm bezeichnet. Fig. 2b zeigt die Farbschichten des Diapositivfilms 10 für das angenommene Belichtungsbeispiel nach der Entwicklung. Die Gelbschicht 11 enthält nur wenig Farbstoff, da sie mit viel blauem Licht belichtet wurde, die Magentaschicht 12 und die Cyanschicht 13 enthalten viel Farbstoff, da sie nicht belichtet wurden. In der Durchlichtbetrachtung ergeben die Farben Magenta und Cyan den Farbeindruck Blau.

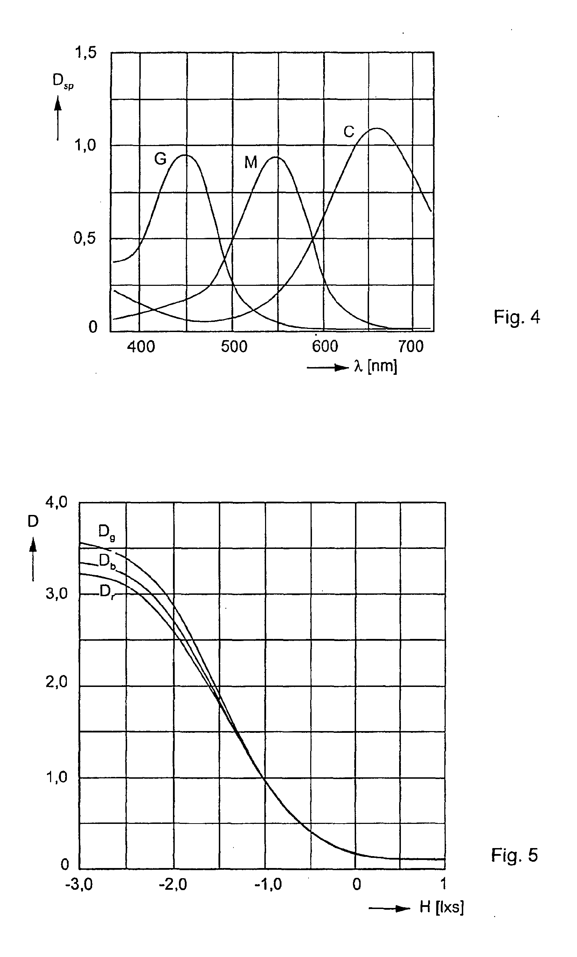

Jede Filmschicht ist durch eine Farbdichtekurve $D_r = r(H)$, $D_g = g(H)$ und $D_b = b(H)$ gekennzeichnet, welche den Zusammenhang zwischen der auf den Film einwirkenden Belichtung H und den jeweils in den einzelnen Film-schichten erreichten Farbdichten ($D_r$, $D_g$, $D_b$) angeben. Die Belichtung H ist der Logarithmus des Produkts aus Beleuchtungsstärke und Belichtungszeit und wird in Luxsekunden gemessen. $D_r = r(H)$ ist die Farbdichtekurve für die rotempfindliche Cyanschicht, $D_g = g(H)$ ist die Farbdichtekurve für die grünempfindliche Magentaschicht und $D_b = b(H)$ ist die Farbdichtekurve für die blauempfindliche Gelbschicht. Fig. 3 zeigt die Farbdichtekurven für einen Farbnegativfilm, bei denen in einem weiten Bereich ein linearer Zusammenhang zwischen der Belichtung H und den nach der Entwicklung des Films erreichten Dichten ($D_r$, $D_g$, $D_b$) besteht. Dieser lineare Bereich wird bei der Aufnahme einer Originalszene mit einer Fotokamera genutzt. Die Steigungen des linearen Bereichs sind außerdem positiv, so dass eine große Lichtmenge bei der Aufnahme einer großen Dichte in der Filmschicht und damit einer geringen Transmission entspricht.

Fig. 4 zeigt den spektralen Dichteverlauf für die Farbschichten Gelb, Magenta und Cyan (G, M, C) des Farbnegativfilms. Daraus ergibt sich, dass die Farbschichten nicht nur jeweils in einem Spektralbereich (blau, grün, rot) empfindlich sind sondern teilweise auch in den anderen Spektralbereichen. So sind zum Beispiel die Magentaschicht und die Cyanschicht in geringem Maß auch für blaues Licht empfindlich und bilden bei der Entwicklung etwas Farbstoff, der zusammen mit dem in der Gelbschicht gebildeten Farbstoff zu einer Vergrauung der Farbe führt. Zur Korrektur der durch diese Nebenabsorptionen verursachten Nebenfarbdichten und Sättigungsverluste sind Farbnegativfilme maskiert. Während der Entwicklung werden zusätzlich zu den Schichtfarbstoffen durch Maskenfarbstoffe farbige Gegenpositive (Masken) gebildet, die sich mit den Nebenfarbdichten zu einem gleichmäßigen Farbstich des Negativs addieren. Beim Kopieren des Negativs auf das Fotopapier wird dieser Farbstich weggefiltert. Aufgrund der Farbmaskierung des Farbnegativfilms sind die drei Farbdichtekurven $D_r$, $D_g$ und $D_b$ nicht deckungsgleich, so dass die Dichtewerte jeweils einen Offsetwert aufweisen, wodurch beispielsweise bei der Belichtung eines Grauwertes drei unterschiedliche Farbdichtewerte entstehen (Fig. 3).

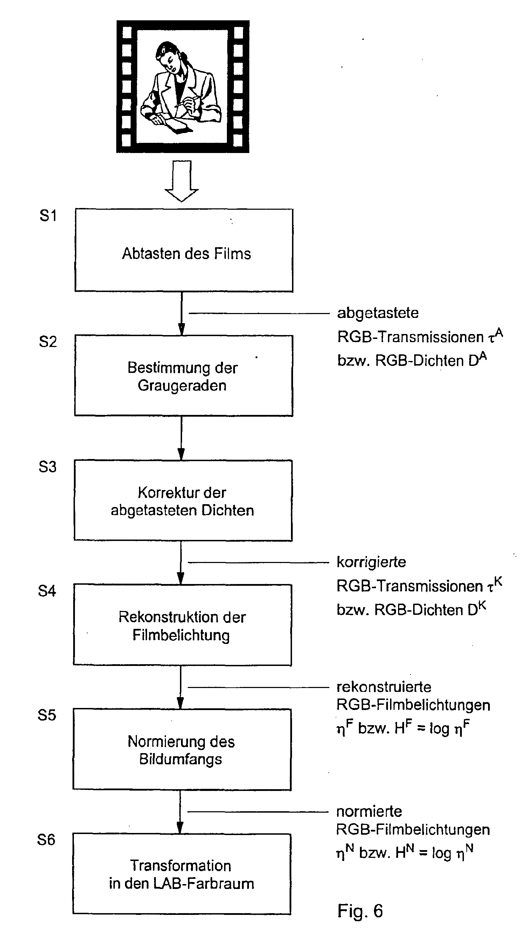

Fig. 5 zeigt die Farbdichtekurven für einen Diapositivfilm, die weitgehend deckungsgleich sind. Der lineare Bereich im Mittelteil der Kurven, der eine größere Steilheit hat als beim Farbnegativfilm, wird bei der Aufnahme einer Originalszene mit einer Fotokamera genutzt. Die Steigungen des linearen Bereichs sind negativ, so dass eine große Lichtmenge bei der Aufnahme einer geringen Dichte in der Filmschicht und damit einer großen Transmission entspricht.

Bei den bekannten Verfahren zur Reproduktion einer Originalszene aus den durch Abtastung gewonnenen Farbwerten eines Diapositivfilms oder Farbnegativfilms werden zunächst ein repräsentativer Bildlichtwert für die hellsten Bildbereiche und ein repräsentativer Bildtiefewert für die dunkelsten Bildbereiche ermittelt, denen dann bestimmte Sollwerte für das Bildlicht und die Bildtiefe in dem für die Reproduktion verwendeten Farbraum zugeordnet werden. Durch eine Farbraumtransformation werden danach alle abgetasteten Farbwerte so in den Reproduktionsfarbraum umgesetzt, dass der Farbumfang zwischen dem repräsentativen Bildlicht- und Bildtiefewert auf den durch die Sollwerte von Bildlicht und Bildtiefe vorgegebenen Farbumfang im Reproduktionsfarbraum abgebildet wird. Bei der Reproduktion eines Farbnegativs werden Bildlicht und Bildtiefe dabei noch invertiert, d.h. der repräsentative Bildlichtwert der abgetasteten Farbwerte hat eine geringere Transmission als der repräsentative Bildtiefewert. Der Sollwert für Bildlicht hat dagegen eine höhere Transmission als der Sollwert für Bildtiefe. Durch die Normierung der Farbumfänge aller drei Farbkomponenten auf den vorgegebenen Soll-Farbumfang wird der Offset der Farbdichtekurven des Farbnegativs eliminiert, was einer Herausfilterung der Farbmaskierung entspricht. Der repräsentative Bildlichtwert und Bildtiefewert der abgetasteten Farbwerte wird im einfachsten Fall durch eine Bedienperson festgelegt, die das abgetastete Bild auf einem Farbmonitor betrachtet und einen oder mehrere repräsentative helle bzw. dunkle Bildpunkte im Bild markiert. Es sind auch automatische Verfahren bekannt geworden, die den repräsentativen Bildlichtwert und Bildtiefewert aufgrund einer Histogrammanalyse der abgetasteten Farbwerte in ihren Farbkomponenten (R, G, B) ermitteln.

In der Patentschrift DE-43 09 879-C2 wird ein Verfahren zur Analyse des Bildumfangs von Bildvorlagen beschrieben, bei dem die abgetasteten Farbwerte in eine Helligkeitskomponente und zwei Farbkomponenten transformiert werden. Aus dem Histogramm der Helligkeitswerte werden der repräsentative Bildlichtwert und Bildtiefewert bestimmt, wobei anhand der Form des Histogramms im Bereich großer Helligkeitswerte bzw. im Bereich geringer Helligkeitswerte verschiedene Bildtypen unterschieden werden und davon abhängig der Bildlichtwert und der Bildtiefewert nach unterschiedlichen Kriterien festgelegt werden.

in der Patentschrift US-6,069,981 wird ein Verfahren zur Bestimmung von geeigneten repräsentativen Bildlicht- und Bildtiefewerten für die Reproduktion von Farbnegativfilmen beschrieben, bei dem für verschiedene im Bild ausgewählte Farbwerte geprüft wird, ob sie nahe genug an der Graulinie liegen. Wenn sie zu weit entfernt von der Graulinie liegen, werden sie verworfen. Die Prüfung erfolgt durch Vergleich mit berechneten RGB-Farbwerten nach einer Formel, die aus den Abtastwerten von einem auf dem Negativmaterial belichteten Graukeil abgeleitet wurde.

In der Patentanmeldung DE-195 31 390-A1 wird ein Verfahren zur Umwandlung von Farbwerten eines Farbnegativs nach einer Negativ/Positiv-Umkehrfunktion beschrieben, bei der nach einer Bildanalyse zur Ermittlung der repräsentativen Werte für Bildlicht und Bildtiefe in den Farbkomponenten eine Farbumkehr bei gleichzeitiger Gradationsanpassung durchgeführt wird. Die Negativ/Positiv-Umkehrfunktion wird als Wertetabelle in einem Tabellen-Speicher abgelegt, und die Farbwerte des Farbnegativs werden mittels der Wertetabelle in die Farbwerte des entsprechenden Farbpositivs umgesetzt.

Die herkömmlichen Verfahren zur Reproduktion einer Originalszene aus den Farbwerten eines abgetasteten Farbnegativfilms bzw. Diapositivfilms beruhen auf der Ermittlung von repräsentativen Werten für Bildlicht und Bildtiefe, die dann in entsprechende Sollwerte für den Farbraum der Reproduktion umgesetzt werden. Dabei werden die Farben auf der Verbindungslinie zwischen dem Bildlicht- und Bildtiefepunkt im RGB-Farbraum der abgetasteten Farbdichten auf die Grauachse des Reproduktionsfarbraums abgebildet. Damit erhält man nur dann eine fehlerfreie und optimale Reproduktionsqualität, wenn auch die Grauachse im Farbraum der abgetasteten Farbwerte auf der Verbindungslinie zwischen dem Bildlicht- und Bildtiefepunkt liegt. Das ist durch die Methoden zur Festlegung dieser Punkte in den herkömmlichen Verfahren jedoch nicht immer gewährleistet, so dass die Reproduktion einen ungewollten Farbstich aufweisen kann. Weiterhin ist bei den herkömmlichen Verfahren die Farbumkehrung beim Farbnegativfilm fest mit der Umfangsanpassung verbunden, wodurch sich in den Bereichen sehr heller bzw. sehr dunkler Farben Kontrastverluste und auch Farbstiche in der Reproduktion ergeben können. Die herkömmlichen Verfahren berücksichtigen auch nicht die vorhandenen Unzulänglichkeiten der Farbschichten und der Abtasteinrichtungen, wodurch zusätzlicher Farbfehler in den abgetasteten Farbwerten entstehen können.

Der Erfindung liegt daher die Aufgabe zugrunde, ein automatisch ablaufendes Verfahren zur Reproduktion einer Originalszene aus einem elektronisch abgetasteten Farbnegativfilm bzw. Diapositivfilm anzugeben, mit dem die fehlerhaften Reproduktionen der herkömmlichen Verfahren vermieden werden und eine gute Reproduktionsqualität sowie eine hohe Genauigkeit bei der Farbumkehr von Negativfilmen erreicht wird.

Diese Aufgabe wird durch die Merkmale des Anspruchs 1 gelöst. Vorteilhafte Ausgestaltungen und Weiterbildungen sind in den Unteransprüchen angegeben.

Die Erfindung wird nachfolgend anhand der Figuren 1 bis 11 näher erläutert.

Es zeigen:

Fig. 1      den Aufbau und die Arbeitsweise eines Farbnegativfilms,

Fig. 2      den Aufbau und die Arbeitsweise eines Diapositivfilms,

Fig. 3      die Farbdichtekurven eines Farbnegativfilms,

Fig. 4      die spektralen Dichteverläufe der Farbschichten in einem Farbnegativfilm,

Fig. 5      die Farbdichtekurven eines Diapositivfilms,

Fig. 6      ein Ablaufdiagramm für das erfindungsgemäße Reproduktionsverfahren,

Fig. 7      die abgetasteten Dichten $D^A$ im RGB-Farbraum,

Fig. 8      die korrigierten Dichten $D^K$ in Abhängigkeit von den abgetasteten Dichten $D^A$,

Fig. 9      die korrigierten Farbdichtekurven eines Farbnegativfilms,

Fig. 10      ein Beispiel für die rekonstruierten Filmbelichtungsgeraden, und

Fig. 11      die Normierung der rekonstruierten Filmbelichtungen.

Fig. 6 zeigt ein Ablaufdiagramm für die Verfahrensschritte S1 bis S6 des erfindungsgemäßen Reproduktionsverfahrens. Die Schritte werden an dieser Stelle zunächst grob skizziert, um eine Übersicht des Verfahrens zu geben, und anschließend im Detail erläutert. Im Schritt S1 wird eine Bildvorlage, die ein Farbnegativfilm oder ein Diapositivfilm sein kann, mit einem Farbbildabtaster abgetastet, z.B. einem Scanner oder einer digitalen Kamera, wobei der Abtaster die Bildvorlage beleuchtet, mit einer bestimmten Auflösung in einzelne Bildpunkte aufteilt und das hindurchscheinende Licht jedes Bildpunkts mit einer Anordnung von in der Regel drei Farbfiltern in einen roten, einen grünen und einen blauen Lichtanteil zerlegt. Die Intensitäten der Lichtanteile werden mit Sensorelementen als abgetastete RGB-Transmissionen $\tau_r^A$, $\tau_g^A$, $\tau_b^A$ gemessen und als digitale Farbwerte abgespeichert. Die abgetasteten RGB-Transmissionen $\tau_r^A$, $\tau_g^A$, $\tau_b^A$ können auch in logarithmierter Form als abgetastete RGB-Dichten $D_r^A$, $D_g^A$, $D_b^A$ ausgedrückt werden, wobei der Zusammenhang gilt:

$$D_r^A = -\log \tau_r^A; \; D_g^A = -\log \tau_g^A; \; D_b^A = -\log \tau_b^A \tag{1}$$

Im Schritt S2 wird aus den abgetasteten RGB-Dichten eine Graugerade bestimmt. Die RGB-Dichten aller abgetasteten Bildpunkte bilden im RGB-Farbraum eine mehr oder weniger langgestreckte Punktwolke, deren Hauptachse in Längsrichtung die Graugerade bildet. Die Richtung der Graugeraden wird mittels einer Kovarianzanalyse der abgetasteten RGB-Dichten ermittelt.

Im Schritt S3 wird anschließend im Bereich hoher Farbdichten eine Sättigungskorrektur der Dichten vorgenommen, indem die hohen abgetasteten RGB-Dichten nichtlinear überhöht werden. Damit werden Unzulänglichkeiten des Filmmaterials und der Abtasteinrichtung teilweise kompensiert und die reproduzierte Bildqualität verbessert. Als Ergebnis der Korrektur erhält man die korrigierten RGB-Transmissionen $\tau_r^K$, $\tau_g^K$, $\tau_b^K$ bzw. die korrigierten RGB-Dichten $D_r^K$, $D_g^K$, $D_b^K$, für die der Zusammenhang gilt:

$$D_r^K = -\log \tau_r^K; \; D_g^K = -\log \tau_g^K; \; D_b^K = -\log \tau_b^K \tag{2}$$

Im Schritt S4 werden aus den korrigierten RGB-Transmissionen die zugehörigen Filmbelichtungen rekonstruiert, indem für die in den korrigierten RGB-Dichten annähernd linearen Farbdichtekurven die Lage und die Steigung bestimmt wird. Daraus erhält man die rekonstruierten RGB-Filmbelichtungen $\eta_r^F$, $\eta_g^F$, $\eta_b^F$ bzw. die zugehörigen logarithmierten Filmbelichtungen $H_r^F$, $H_g^F$, $H_b^F$, wobei der Zusammenhang gilt:

$$H_r^F = \log \eta_r^F; \; H_g^F = \log \eta_g^F; \; H_b^F = \log \eta_b^F \tag{3}$$

Im Schritt S5 werden die Belichtungsumfänge in den drei Farbkanälen auf einen standardisierten Belichtungsumfang normiert, wodurch sich die normierten RGBFilmbelichtungen $\eta_r^N$, $\eta_g^N$, $\eta_b^N$ bzw. die zugehörigen logarithmierten normierten Filmbelichtungen $H_r^N$, $H_g^N$, $H_b^N$ ergeben, wobei der Zusammenhang gilt:

$$H_r^N = \log \eta_r^N; \; H_g^N = \log \eta_g^N; \; H_b^N = \log \eta_b^N \tag{4}$$

Im letzten Schritt S6 werden die normierten RGB-Filmbelichtungen schließlich in den LAB-Farbraum transformiert oder in einen anderen für die weitere Verarbeitung der Bilddaten geeigneten Farbraum. Zur Durchführung der Schritte S1 bis S6 können alle in der hohen Reproduktionsauflösung abgetasteten Bildpunkte herangezogen werden. Zur Einsparung von Rechenzeit und Speicherplatz ist es aber vorteilhafter, die Graugerade, die Korrekturparameter und die weiteren für die Reproduktion erforderlichen Parameter und Eckwerte anhand einer repräsentativen Teilmenge der Bildpunkte zu bestimmen, beispielsweise mit den Bildpunkten eines vorab in grober Auflösung abgetasteten Bildes (Prescan). Nach der Bestimmung der Reproduktionsparameter wird das Bild dann noch einmal in der gewünschten hohen Auflösung abgetastet und die ermittelten Reproduktionsparameter werden auf die hoch aufgelösten Bildpunkte angewendet.

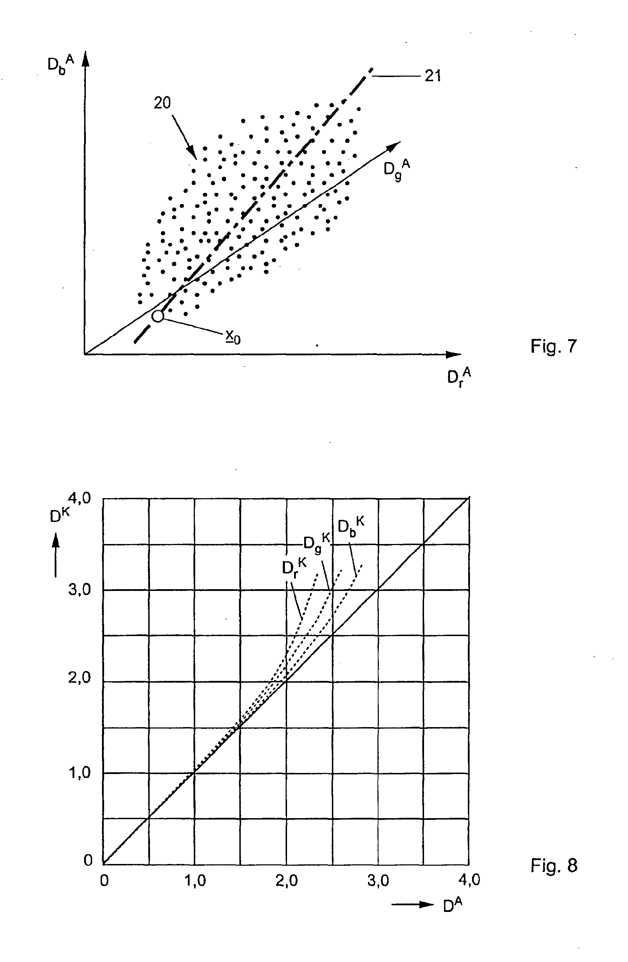

Fig. 7 zeigt die abgetasteten RGB-Dichten $D^A$ im RGB-Farbraum. Die Dichten jedes Bildpunkts repräsentieren einen Punkt im RGB-Farbraum mit den Werten $D_r^A$, $D_g^A$, $D_b^A$. Alle Bildpunkte zusammen bilden die Punktwolke 20, die sich in einer mehr oder weniger langgestreckten Form entlang der Graugeraden 21 des Bildes ausdehnt. Die Graugerade 21 repräsentiert Bildpunkte, deren Kombination der drei Dichtewerte $D_r^A$, $D_g^A$, $D_b^A$ einen farbneutralen Grauwert ergibt. Die Graugerade 21 wird allgemein durch die vektorielle Parametergleichung

$$\underline{G}(t) = \underline{s}_0 + t \times \underline{e} \qquad\qquad (5)$$

beschrieben. Darin ist $\underline{s}_0$ ein Vektor, durch dessen Endpunkt die Gerade $\underline{G}(t)$ verläuft, und $\underline{e}$ ist ein Einheitsvektor, der die Richtung der Geraden bestimmt. Die Vektoren haben jeweils die drei Komponenten $D_r$, $D_g$, $D_b$.

Im Schritt S2 des erfindungsgemäßen Reproduktionsverfahrens wird die Graugerade 21 des Bildes als die Hauptachse der Punktwolke 20 bestimmt, d.h. als die Gerade, die die Punktwolke 20 optimal approximiert. Dazu wird die Graugerade 21 so in die Punktwolke 20 gelegt, dass der Mittelwert der quadrierten kürzesten Abstände zwischen den Punkten der Punktwolke 20 und der Graugeraden 21 ein Minimum wird. Die Lösung dieser Minimierungsaufgabe ergibt zunächst, dass die Graugerade 21 durch den Schwerpunkt M der Punktwolke 20 verläuft, d.h. der Schwerpunkt liegt an der Spitze des Vektors $\underline{s}_0$ in Gleichung (5). Der Schwerpunkt M wird ermittelt, indem über die Dichtewerte der Punktwolke 20 komponentenweise gemittelt wird, in vektorieller Schreibweise:

$$\underline{M} = \frac{1}{N} \sum_{x} \underline{D}_x^A \qquad\qquad (6)$$

Dabei ist $\underline{M}$ ein Spaltenvektor mit den Komponenten $\underline{M} = \underline{s}_0 = (D_{rM}, D_{gM}, D_{bM})^T$, und die einzelnen Punkte der Punktwolke 20 sind durch die Spaltenvektoren $\underline{D}_x^A = (D_{rx}^A, D_{gx}^A, D_{bx}^A)^T$ beschrieben. Aus der Lösung der Minimierungsaufgabe ergibt sich weiterhin, dass der Vektor $\underline{e}$ der Eigenvektor $\underline{e}_0$ zum größten Eigenwert $\lambda_0$ der Kovarianzmatrix $\underline{\underline{C}}$ der Bildpunktvektoren $\underline{D}_x^A$ ist.

$$\underline{\underline{C}} = \frac{1}{N} \sum_{x} (\underline{D}_x^A)(\underline{D}_x^A)^T - \underline{M}\underline{M}^T \qquad\qquad (7)$$

Die Kovarianzmatrix $\underline{\underline{C}}$ wird aus der komponentenweisen Mittelung über die Elemente der Matrizen $(\underline{D}_x^A)(\underline{D}_x^A)^T$ und aus der Schwerpunktmatrix $\underline{M}\,\underline{M}^T$ berechnet. Nach bekannten Rechenverfahren, z.B. dem Jacobi-Verfahren [William H. Press et al.: Numerical Recipes; Cambridge University Press; 1992; S. 463- 469], werden aus der Kovarianzmatrix $\underline{\underline{C}}$ die drei Eigenwerte $\lambda_0$, $\lambda_1$, $\lambda_2$ und die zugehörigen Eigenvektoren ermittelt. Die Eigenvektoren $\underline{e}_0$, $\underline{e}_1$, $\underline{e}_2$ sind Einheitsvektoren, d.h. auf die Länge 1 normiert und paarweise orthogonal. Der Eigenvektor $\underline{e}_0$ beschreibt die Richtung der Hauptachse der Punktwolke, d.h. die Richtung, in die sie sich vorwiegend ausdehnt, die Eigenvektoren $\underline{e}_1$ und $\underline{e}_2$ beschreiben dazu senkrechte Nebenachsen der Punktwolke.

Nach einer Variante des erfindungsgemäßen Verfahrens wird ein Punkt $\underline{x}_0 = (D_{r0}, D_{g0}, D_{b0})$ im RGB-Farbraum vorgegeben, durch den die Graugerade 21 verlaufen soll. Vorzugsweise wird dafür aus den abgetasteten Bildpunkten ein farbneutraler Bildtiefepunkt ausgewählt. Die automatische Bestimmung eines farbneutralen Bildtiefepunktes, beispielsweise nach dem in der DE-43 09 879-C2 beschriebenen Verfahren, ist wesentlich unkritischer als die Bestimmung eines Bildlichtpunktes, da die Bildtiefen in den meisten Bildern farbneutral sind bzw. Farbstiche in den Bildtiefen weniger auffällig sind. In Fig. 7 ist der Punkt $\underline{x}_0$ für die abgetasteten Dichten eines Farbnegativfilms eingezeichnet. Nach dieser Variante wird die Richtung der Graugeraden 21 aus dem Eigenvektor $\underline{e}_0$ der modifizierten Kovarianzmatrix $\underline{\underline{c}}_0$ bestimmt.

$$\underline{\underline{C}}_0 = \frac{1}{N} \sum_x (\underline{D}_x^A)(\underline{D}_x^A)^T - \underline{x}_0 \underline{M}^T + \underline{M}\underline{x}_0^T + \underline{x}_0 \underline{x}_0^T \qquad (8)$$

Für den Fall $\underline{x}_0 = \underline{M}$ geht die Gleichung (8) in die Gleichung (7) über. Wenn der Benutzer mit der automatischen Bestimmung der Graugeraden 21 nicht ganz zufrieden ist, kann er durch die Wahl eines weiteren neutralen Punktes im Bild die Graugrade 21 manuell festlegen. Der gewählte Punkt sollte im Originalbild einem helleren Grauwert als dem Grauwert des Punktes $\underline{x}_0$ entsprechen.

Nach der Bestimmung der Graugeraden 21 wird im Schritt S3 im Bereich hoher Farbdichten eine Sättigungskorrektur der Dichten vorgenommen, indem die hohen abgetasteten RGB-Dichten nichtlinear überhöht werden. An den Farbdichtekurven für einen Farbnegativfilm in Fig. 3 erkennt man, dass für hohe Filmbelichtungen H nicht beliebig hohe Dichten D erreichbar sind, bzw. dass die Transmissionen $\tau$ nicht beliebig klein werden. Ebenso ergibt sich aus Fig. 5 für einen Diapositivfilm, dass für verschwindend geringe Filmbelichtungen H nicht beliebig hohe Dichten D erreichbar sind, bzw. dass die Transmissionen $\tau$ nicht beliebig klein werden. Das liegt daran, dass die Menge der Farbstoffe in den Farbschichten begrenzt ist. Als weiterer Effekt kommt hinzu, dass die für die Abtastung verwendeten Farbfilter im Scanner nicht zu den spektralen Dichteverläufen der Farbschichten Gelb, Magenta und Cyan passen, d. h. ihre Maxima bei anderen Wellenlängen haben und auch einen anderen spektralen Verlauf haben. Dadurch sind die abgetasteten Dichten $D^A$ noch kleiner als die tatsächlichen Farbdichten D des Films. Alle Effekte zusammen bewirken, dass minimale Transmissionen $\underline{\tau}^A_{min} = (\tau_r{}^A_{min}, \tau_g{}^A_{min}, \tau_b{}^A_{min})$ nicht unterschritten werden können.

Zur Korrektur dieser Effekte werden die minimalen Transmissionen von den abgetasteten Transmissionen abgezogen, d.h. die korrigierten Transmissionen $\underline{\tau}^K = (\tau_r{}^K, \tau_g{}^K, \tau_b{}^K)$ ergeben sich zu:

$$\underline{\tau}^K = \underline{\tau}^A - \underline{\tau}^A{}_{min} \qquad (9)$$

Dem entsprechen die korrigierten Dichten $\underline{D}^K$.

$$\underline{D}^K = -\log(\underline{\tau}^A - \underline{\tau}^A_{min}) \qquad (10)$$

Zur Festlegung der minimalen Transmissionen wird ein farbneutraler Punkt mit hohen abgetasteten Dichten $\underline{D}^A_{max}$ in den abgetasteten Bildpunkten ausgewählt, und es wird die Bedingung aufgestellt, dass die korrigierten Dichten $\underline{D}^K_{max}$ dieses Punktes auf der Graugeraden 21 liegen. Dabei wird vorausgesetzt, dass sich die Lage der Graugeraden 21 im Farbraum der korrigierten Dichten $\underline{D}^K$ nicht nennenswert gegenüber dem Farbraum der abgetasteten Dichten $\underline{D}^A$ verändert. Diese Annahme wird durch die Praxis bestätigt. Für die korrigierten Dichten $\underline{D}^K_{max}$ des Punktes maximaler Dichte gilt dann:

$$\underline{D}^K_{max} = -\log(10 - \underline{D}^A{}_{max} - \underline{\tau}^A{}_{min}) = \underline{x}_0 + \underline{e}_0 t \qquad (11)$$

Durch Auflösung dieser Gleichung nach $\underline{\tau}^A_{min}$ lassen sich Werte für die minimalen Transmissionen $\underline{\tau}^A_{min} = (\tau_r{}^A{}_{min}, \tau_g{}^A{}_{min}, \tau_b{}^A{}_{min})$ bestimmen.

$$\tau_{r\min}^{A} = 10^{-D_{r\max}^{A}}\left(1 - 10^{-e_{0r}\left(t - \left(D_{r\max}^{A} - x_{0r}\right)/e_{0r}\right)}\right)$$

$$\tau_{g\min}^{A} = 10^{-D_{g\max}^{A}}\left(1 - 10^{-e_{0g}\left(t - \left(D_{g\max}^{A} - x_{0g}\right)/e_{0g}\right)}\right) \qquad (12)$$

$$\tau_{b\min}^{A} = 10^{-D_{b\max}^{A}}\left(1 - 10^{-e_{0b}\left(t - \left(D_{b\max}^{A} - x_{0b}\right)/e_{0b}\right)}\right)$$

In den Gleichungen (12) wird der Parameter t so gewählt, dass sich einerseits möglich kleine Werte für $\underline{\tau}^{A}_{min}$ ergeben und dass andererseits alle Komponenten von $\underline{\tau}^{A}_{min}$ positiv sind. Für übliche Farbnegativfilme mit einer orangefarbigen Maskierung sollte der Parameter t so gewählt werden, dass außerdem die Bedingung $\tau_{r}^{A}{}_{min} \geq \tau_{g}^{A}{}_{min} \geq \tau_{b}^{A}{}_{min}$ erfüllt ist.

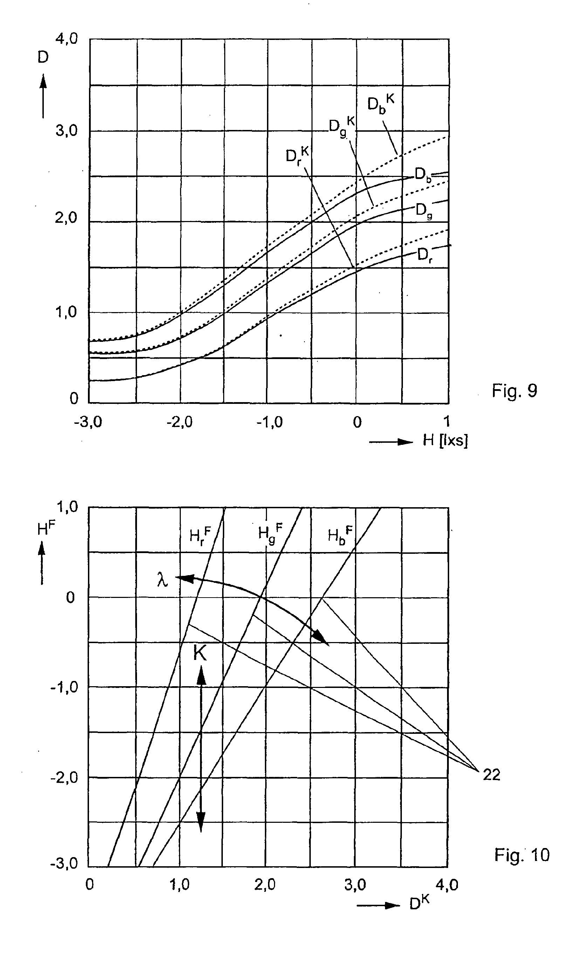

Fig. 8 zeigt ein Beispiel für nach Gleichung (10) korrigierte Dichten $\underline{D}^{K}$ in Abhängigkeit von den unkorrigierten Dichten $\underline{D}^{A}$. Im Bereich hoher Farbdichten werden die Dichten durch die Korrektur nichtlinear überhöht. Dadurch werden die Sättigungseffekte und Abtastfehler zumindest teilweise herausgerechnet. Fig. 9 zeigt am Beispiel des Farbnegativfilms, dass die den korrigierten Dichten entsprechenden korrigierten Farbdichtekurven eine geringere Sättigung aufweisen. Durch die Korrektur wird der lineare Bereich der Farbdichtekurven erweitert und sozusagen ein idealeres Filmmaterial simuliert. Wenn durch eine Überbelichtung bei der Aufnahme des Originalbildes die Dichten eines Teils der abgetasteten Bildpunkte im Sättigungsbereich der ursprünglichen Farbdichtekurven liegen, so wird der Belichtungsfehler durch die Korrektur kompensiert oder zumindest verringert, womit die Bildqualität des reproduzierten Bildes verbessert wird.

Im Schritt S4 werden aus den korrigierten Transmissionen $\underline{\tau}^{K}$ die zugehörigen Filmbelichtungen $\underline{\eta}^{F}$ bzw. die logarithmierten Filmbelichtungen $\underline{H}^{F} = \log \underline{\eta}^{F}$ rekonstruiert, indem für den mittleren linearen Teil der Farbdichtekurven die Lage und die Steigung bestimmt wird. Für den Zusammenhang von logarithmierten Filmbelichtungen $\underline{H}^{F}$ und korrigierten Dichten $\underline{D}^{K}$ werden lineare Gleichungen mit noch unbekannten Parametern $\underline{a}$ und $\underline{b}$ angesetzt:

$$\underline{H}^{F} = \underline{a} + \underline{b} \times \underline{D}^{K} \qquad (13)$$

In Komponenten-Schreibweise lauten diese Gleichungen:

$$H_{r}^{F} = a_{r} + b_{r} \times D_{r}^{K}$$

$$H_{g}^{F} = a_{g} + b_{g} \times D_{g}^{K} \qquad (14)$$

$$H_{b}^{F} = a_{b} + b_{b} \times D_{b}^{K}$$

Dieser Zusammenhang muss auch für die Bildpunkte auf der Graugeraden 21 gelten, d.h. durch Einsetzen der Beziehung für die Graugerade 21 gilt:

$$H_{r}^{F} = a_{r} + b_{r} \times x_{0r} + b_{r} \times e_{0r} \times t$$

$$H_{g}^{F} = a_{g} + b_{g} \times x_{0g} + b_{g} \times e_{0g} \times t \qquad (15)$$

$$H_{b}^{F} = a_{b} + b_{b} \times x_{0b} + b_{b} \times e_{0b} \times t$$

Andererseits muss für alle Punkte auf der Graugeraden 21 gelten, dass sie bei der Belichtung durch gleichgroße Filmbelichtungswerte erzeugt wurden, d.h. dass für alle Werte des Parameters t gilt:

$$H_r^F = H_g^F = H_b^F \tag{16}$$

Das ist nur dann erfüllt, wenn die drei in den Gleichungen (15) beschriebenen Geraden deckungsgleich sind, d.h. einerseits die Faktoren des Parameters t den gleichen Wert haben und andererseits die konstanten Anteile den gleichen Wert haben.

$$b_r \times e_{0r} = b_g \times e_{0g} = b_b \times e_{0b} = \lambda$$

$$a_r + b_r \times x_{0r} = a_g + b_g \times x_{0g} = a_b + b_b \times x_{0b} = K \tag{17}$$

Daraus ergibt sich für die Parameter $a_i$ und $b_i$ der Filmbelichtungsgeraden nach Gleichung (14), wobei der Index i für r, g oder b steht:

$$b_i = \lambda/e_{0i}$$

$$a_i = -x_{0i} \times \lambda/e_{0i} + K \tag{16}$$

Fig. 10 zeigt ein Beispiel für die so ermittelten Filmbelichtungsgeraden 22. Die Konstante K, mit der die Geraden in $H^F$-Richtung verschoben werden können, und der Faktor $\lambda$, mit dem die Steigungen der Geraden verändert werden können, sind dabei noch frei wählbar. Diese Größen sind offen, weil aus den abgetasteten und korrigierten Dichten $D_i^K$ nicht erkennbar ist, welche absoluten Lichtmengen bei der Aufnahme des Bildes erforderlich waren, um die abgetasteten Dichten in den Farbschichten des Films zu erzeugen, d.h. man weiß nicht, welche Empfindlichkeit das Filmmaterial hatte. Aus der relativen Lage und Steigung der Filmbelichtungsgeraden 22 zueinander ist nur abzuleiten, welches Verhältnis der Lichtmengen erforderlich war, um die abgetasteten Dichten zu erzeugen. Bei der Reproduktion des Bildes wird aber auch nur diese Information benötigt, d.h. die Kenntnis der absoluten Lichtmengen ist nicht erforderlich. Deshalb kann man die konstanten Größen K und $\lambda$ in gewissen Grenzen frei wählen. Zweckmäßigerweise werden sie so gewählt, dass die sich ergebenden Werte für $H_i^F$ einem in der Praxis verwen-deten Filmmaterial mit z.B. mittlerer Filmempfindlichkeit entsprechen.

Aus der Umrechnung der Gleichungen (14) in die nicht logarithmierten rekonstruierten Filmbelichtungen $\eta_i^F$ ergibt sich in Verbindung mit der Gleichung (9):

$$\eta_i^F = 10^{H_i^F} = 10^{a_i + b_i \times D_i^K} = 10^{a_i}(10^{D_i^K})^{b_i}$$
$$= C_i(\tau_i^K)^{-b_i} = C_i(\tau_i^A - \tau_{i\,min}^A)^{-b_i} \tag{19}$$

Darin steht der Index i für r, g oder b, und die Werte $C_i$ sind aus den Parametern $a_i$ abgeleitete Konstanten. Nachdem die Verfahrensschritte S1 bis S4 durchgeführt sind, können die rekonstruierten Filmbelichtungen $\eta_i^F$ nach den Gleichungen (19) aus den abgetasteten Transmissionen $\tau^A$ berechnet werden. Mit der Berechnung der rekonstruierten Filmbelichtungen $\eta_i^F$ wird bei Farbnegativfilmen auch der Offset der Farbdichtekurven eliminiert, was einer Herausfilterung der Farbmaskierung entspricht.

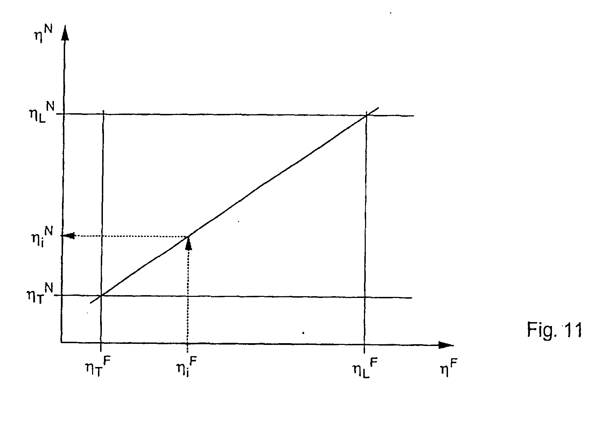

Im Schritt S5 werden die rekonstruierten Filmbelichtungen $\eta_i^F$ durch eine Umfangsanpassung auf einen standardisierten Belichtungsumfang normiert. Dazu werden Bildlichtpunkte $\eta_L^F$ und Bildtiefepunkte $\eta_T^F$ gewonnen, beispielsweise aus einer Histogrammanalyse der rekonstruierten Filmbelichtungen $\eta_i^F$. Diese Bildlichtpunkte und Bildtiefepunkte, die für alle Komponenten gleich gewählt werden, werden auf einen normierten Bildlicht-Fixpunkt $\eta_L^N$ und einen normierten Bildtiefe-Fixpunkt $\eta_T^N$ abgebildet. Fig. 11 zeigt dies in einem Diagramm. Daraus ergibt sich die Beziehung für die normierten Filmbelichtungen $\eta_i^N$ zu:

$$\eta_i^N = \frac{\eta_L^N - \eta_T^N}{\eta_L^F - \eta_T^F}(\eta_i^F - \eta_T^F) + \eta_T^N \qquad (20)$$

Im letzten Schritt S6 werden die normierten Filmbelichtungen $\eta_i^N$ schließlich in den LAB-Farbraum transformiert oder in einen anderen für die weitere Verarbeitungsschritte der reproduzierten Bilddaten geeigneten Farbraum. Die Transformation in den LAB-Farbraum wird beispielsweise mittels einer dreidimensionalen Zuordnungstabelle (Lookup Table) durchgeführt, die für jede mögliche Kombination der drei normierten Filmbelichtungen $\eta_r^N$, $\eta_g^N$, $\eta_b^N$ die zugehörigen LAB-Farbwerte enthält. Um Speicherplatz einzusparen, sind die Zuordnungen der Filmbelichtungen zu den LAB-Farbwerten vorzugsweise nur für die Gitterpunkte eines dreidimensionalen Gitters geringerer Auflösung im RGB-Farbraum gespeichert. Für dazwischen liegende Kombinationen der drei normierten Filmbelichtungen $\eta_r^N$, $\eta_g^N$, $\eta_b^N$ werden die zugehörigen LAB-Farbwerte aus den für die benachbarten Gitterpunkte gespeicherten LAB-Farbwerten interpoliert. Die den Gitterpunkten zuzuordnenden LAB-Farbwerte werden gewonnen, indem man Farbtafeln mit Farbflächen, deren LAB-Farbwerte ausgemessen wurden, auf dem Filmmaterial fotografiert, das später für die Reproduktion von aufgenommenen Bildern verwendet werden soll. Nach der Entwicklung der Filme mit den fotografierten Farbtafeln werden die Schritte S1 bis S5 durchgeführt, so dass man für die Farbflächen die rekonstruierten normierten Filmbelichtungen $\eta_r^N$, $\eta_g^N$, $\eta_b^N$ erhält. Diese können dann direkt den zuvor ausgemessenen LAB-Farbwerten zugeordnet werden.

Das beschriebene erfindungsgemäße Verfahren zur automatischen Reproduktion der Farben der Originalszene aus einer elektronisch abgetasteten Bildvorlage, die als Farbnegativ- oder Diapositivfilm vorliegt, weist gegenüber den Verfahren nach dem Stand der Technik mehrere Vorteile auf. Die Graugerade 21 wird nicht als Verbindungslinie von jeweils einem Bildlichtpunkt und einem Bildtiefenpunkt bestimmt, sondern aus allen abgetasteten Bildpunkten als optimale Approximation der Hauptachse der Punktwolke 20 im RGB-Farbraum. Dadurch wird die Graugerade 21 mit größerer Sicherheit so ermittelt, dass die Reproduktion ohne verbleibenden Farbstich erfolgt. Durch die Sättigungskorrektur der abgetasteten Dichten werden die Sättigungseffekte in den Farbschichten des Filmmaterials und Abtastfehler zumindest teilweise herausgerechnet. Dadurch wird der lineare Bereich der Farbdichtekurven erweitert und ein idealeres Filmmaterial simuliert, womit die Bildqualität des reproduzierten Bildes verbessert wird. Die Umfangsanpassung erfolgt unabhängig von der Rekonstruktion der Filmbelichtungsgeraden 22, wodurch das Verfahren flexibler an die Reproduktionsbedingungen angepasst werden kann und Reproduktionsfehler in den Bereichen sehr heller bzw. sehr dunkler Farben vermieden werden können.

## Patentansprüche

1. Verfahren zur automatischen Reproduktion der Farben einer Originalszene aus einer als Farbnegativ- oder Diapositivfilm vorliegenden Bildvorlage, die elektronisch abgetastet wird, wobei die RGB-Farbwerte der Bildpunkte als abgetastete Transmissionen ($\tau_r^A$, $\tau_g^A$, $\tau_b^A$) bzw. abgetastete Dichten ($D_r^A$, $D_g^A$, $D_b^A$) gespeichert werden, **dadurch gekennzeichnet, dass**

   - im RGB-Farbraum eine Graugerade (21) ermittelt wird, die die Hauptachse der durch die abgetasteten Dichten ($D_r^A$, $D_g^A$, $D_b^A$) der Bildpunkte gebildete Punktwolke (20) optimal approximiert,
   - korrigierte Transmissionen ($\tau_r^K$, $\tau_g^K$, $\tau_b^K$) bestimmt werden, denen korrigierte Dichten ($D_r^K$, $D_g^K$, $D_b^K$) entsprechen, indem von den abgetasteten Transmissionen ($\tau_r^A$, $\tau_g^A$, $\tau_b^A$) jeweils minimale Transmissionswerte ($\tau_r^{A}{}_{min}$, $\tau_g^{A}{}_{min}$, $\tau_b^{A}{}_{min}$) subtrahiert werden,
   - aus den korrigierten Transmissionen ($\tau_r^K$, $\tau_g^K$, $\tau_b^K$) rekonstruierte Filmbelichtungen ($\eta_r^F$, $\eta_g^F$, $\eta_b^F$) ermittelt werden, wobei mittels der Graugeraden (21) Filmbelichtungsgeraden (22) konstruiert werden, die den Zusammenhang zwischen den logarithmierten Filmbelichtungen ($H_r^F = \log \eta_r^F$, $H_g^F = \log \eta_g^F$, $H_b^F = \log \eta_b^F$) und den korrigierten Dichten ($D_r^K$, $D_g^K$, $D_b^K$) beschreiben, und
   - die rekonstruierten Filmbelichtungen ($\eta_r^F$, $\eta_g^F$, $\eta_b^F$) auf einen Bildumfang zwischen einem normierten Bildlicht-Fixpunkt ($\eta_L^N$) und einem normierten Bildtiefe-Fixpunkt ($\eta_T^N$) abgebildet werden, wobei normierte Filmbelichtungen ($\eta_r^N$, $\eta_g^N$, $\eta_b^N$) bestimmt werden.

2. Verfahren nach Anspruch 1, **dadurch gekennzeichnet, dass** die Richtung der Graugeraden (21) durch den Eigenvektor ($\underline{e}_0$) des größten Eigenwertes ($\lambda_0$) der Kovarianzmatrix ($\underline{C}$) der Bildpunktvektoren ($\underline{D}_x^A$) bestimmt wird,

wobei die Komponenten jedes Bildpunktvektors die abgetasteten Dichten ($D_r^A$, $D_g^A$, $D_b^A$) des Bildpunkts sind.

3. Verfahren nach Anspruch 1 oder 2, **dadurch gekennzeichnet, dass** die Graugerade (21) durch den Schwerpunkt (<u>M</u>) der Punktwolke (20) verläuft.

4. Verfahren nach Anspruch 1 oder 2, **dadurch gekennzeichnet, dass** die Graugerade (21) durch einen vorgegebenen neutralen Bildtiefepunkt (<u>x</u>$_0$) verläuft.

5. Verfahren nach Anspruch 1, **dadurch gekennzeichnet, dass** die minimalen Transmissionswerte ($\tau_r^A{}_{min}$, $\tau_g^A{}_{min}$, $\tau_b^A{}_{min}$) aus der Bedingung bestimmt werden, dass die korrigierten Dichten ($D_r^K{}_{max}$, $D_g^K{}_{max}$, $D_g^K{}_{max}$) eines Bildpunktes maximaler Dichte auf der Graugeraden (21) liegen.

6. Verfahren nach Anspruch 1, **dadurch gekennzeichnet, dass** die normierten Filmbelichtungen ($\eta_r^N$, $\eta_g^N$, $\eta_b^N$) in den LAB-Farbraum transformiert werden.

blau

1

blau

2

3

4

5

Fig. 1a

blau   grün   rot

2

3

4

5

6

7

8

9

Fig. 1b

6

7

8

9

Fig. 1c

blau

1

10

11

12

13

Fig. 2a

10

11

12

13

Fig. 2b

Fig. 3

$D_b$

$D_g$

$D_r$

D

4,0

3,0

2,0

1,0

0

-3,0    -2,0    -1,0    0    1

H [lxs]

Fig. 4

Fig. 5

S1

Abtasten des Films

— abgetastete
RGB-Transmissionen $\tau^A$
bzw. RGB-Dichten $D^A$

S2

Bestimmung der
Graugeraden

S3

Korrektur der
abgetasteten Dichten

— korrigierte
RGB-Transmissionen $\tau^K$
bzw. RGB-Dichten $D^K$

S4

Rekonstruktion der
Filmbelichtung

— rekonstruierte
RGB-Filmbelichtungen
$\eta^F$ bzw. $H^F = \log \eta^F$

S5

Normierung des
Bildumfangs

— normierte
RGB-Filmbelichtungen
$\eta^N$ bzw. $H^N = \log \eta^N$

S6

Transformation
in den LAB-Farbraum

Fig. 6

Fig. 7

Fig. 8

Fig. 9

Fig. 10

Fig. 11